# EUROPEAN PATENT APPLICATION

(11) **EP 4 404 657 A1**
(43) Date of publication of application: **24.07.2024**
(21) Application number: 21957138.7
(22) Date of filing: 17.09.2021
(51) Int. Cl.: H04W 72/04

(54) **PROCESSING METHOD AND APPARATUS FOR TEMPORARY REFERENCE SIGNAL CLUSTER, COMMUNICATION DEVICE, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2021/119160
(87) International publication number: WO 2023/039857

(57) **Abstract**

Embodiments of the present disclosure provide a processing method and apparatus for a temporary reference signal (RS) cluster, a communication device, and a storage medium. The processing method for a temporary RS cluster executed by a terminal may comprise: when determined according to a network side configuration that a transmission resource of a temporary RS cluster is conflicted with an unavailable resource, determining a time interval between two temporary RS clusters of adjacent transmission.

## Description

### TECHNICAL FIELD

The disclosure relates to, but is not limited to, a field of wireless communication technologies, in particular to a method for processing a temporary reference signal burst, an apparatus for processing a temporary reference signal burst, a communication device and a storage medium.

### BACKGROUND

In the research on a dynamic spectrum sharing (DSS) project of the 3GPP Release 17 (Rel-17), in order to speed up a secondary cell (SCell) activation/de-activation process, a temporary Reference Signal (RS) is defined. A base station triggers transmission of the temporary RS through a Media Access Control (MAC) Control Element (CE) during the SCell activation process.

A terminal performs Automatic Gain Control (AGC) adjustment and/or Time (T)/Frequency (F) tracking based on the temporary RS, to avoid waiting for the synchronizing signal block based radio resource management measurement timing configuration (SMTC) period to perform the operation according to the synchronizing signal block (SSB). According to the definition of Random Access Network (RAN) 1, the temporary RS reuses a time-frequency domain structure of a current Tracking RS (TRS). That is, a temporary RS burst contains 4 Orthogonal Frequency Division Multiplexing (OFDM) symbols on 2 consecutive slots.

### SUMMARY

The embodiments of the disclosure provide a method for processing a temporary reference signal (RS) burst, an apparatus for processing a temporary RS burst, a communication device and a storage medium.

According to a first aspect of embodiments of the disclosure, a method for processing a temporary RS burst, performed by a terminal, is provided. The method includes: in response to a transmission resource of one of two temporary RS bursts determined based on a network side configuration conflicting with an unusable resource, determining a time interval between the two temporary RS bursts transmitted adjacently.

According to a second aspect of embodiments of the disclosure, a method for processing a temporary RS burst, performed by a base station, is provided. The method includes: in response to a transmission resource of one of two temporary RS bursts determined based on a network side configuration conflicting with an unusable resource, determining a time interval between the two temporary RS bursts transmitted adjacently.

According to a third aspect of embodiments of the disclosure, an apparatus for processing a temporary RS burst is provided. The apparatus includes: a first determining module, configured to, in response to a transmission resource of one of two temporary RS bursts determined based on a network side configuration conflicting with an unusable resource, determine a time interval between the two temporary RS bursts transmitted adjacently.

According to a fourth aspect of embodiments of the disclosure, an apparatus for processing a temporary RS burst is provided. The apparatus includes: a second determining module, configured to, in response to a transmission resource of one of two temporary RS bursts determined based on a network side configuration conflicting with an unusable resource, determine a time interval between the two temporary RS bursts transmitted adjacently.

According to a fifth aspect of embodiments of the disclosure, a communication device is provided. The communication device includes a processor, a transceiver, a memory and executable programs stored on the memory and being executable by the processor. When the executable programs are executed by the processor, the method for processing a temporary RS burst of the first aspect or the second aspect is implemented.

According to a sixth aspect of embodiments of the disclosure, a computer storage medium having executable programs stored thereon is provided. When the executable programs are executed by a processor, the method for processing a temporary RS burst of the first aspect or the second aspect is implemented.

In the technical solutions provided by the embodiments of the disclosure, if there is conflict between the transmission resource one of two temporary RS burst indicated by the network side configuration and the unusable resource, the transmission interval between the two temporary RS bursts transmitted adjacently is determined without considering the network side configuration. The temporary RS burst sent in accordance with the transmission interval allows the receiving terminal to have a sufficient time interval to be ready to receive the next temporary RS burst after processing the current temporary RS burst, thereby ensuring a success rate of the transmission of the temporary RS burst.

It should be understood that the above general description and the following detailed descriptions are exemplary and explanatory only and do not limit the embodiments of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram of a wireless communication system according to an embodiment.
FIG. 2 is a flowchart of a method for processing a temporary RS burst according to an embodiment.
FIG. 3A is a flowchart of a method for processing a temporary RS burst according to an embodiment.
FIG. 3B is a flowchart of a method for processing a temporary RS burst according to an embodiment.
FIG. 4 is a flowchart of a method for processing a temporary RS burst according to an embodiment.
FIG. 5 is a flowchart of a method for processing a temporary RS burst according to an embodiment.
FIG. 6 is a schematic diagram of a distribution of a TRS burst in a time-frequency domain according to an embodiment.
FIG. 7 is a schematic diagram of a slot structure according to an embodiment.
FIG. 8 is a schematic diagram of a distribution of adjacently transmitted two TRS bursts in a time-frequency domain according to an embodiment.
FIG. 9 is a schematic diagram of a correspondence between a slot structure and a time interval according to an embodiment.
FIG. 10 is a schematic diagram of indicating a time interval between adjacently transmitted two temporary RS bursts through Downlink Control Information (DCI) according to a slot structure according to an embodiment.
FIG. 11 is a schematic diagram of indicating a time interval between adjacently transmitted two temporary RS bursts through a Media Access Control (MAC) Control Element (CE) according to a slot structure according to an embodiment.
FIG. 12 is a schematic diagram of an apparatus for processing a temporary RS burst according to an embodiment.
FIG. 13 is a schematic diagram of an apparatus for processing a temporary RS burst according to an embodiment.
FIG. 14 is a schematic diagram of a terminal according to an embodiment.
FIG. 15 is a schematic diagram of a base station according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

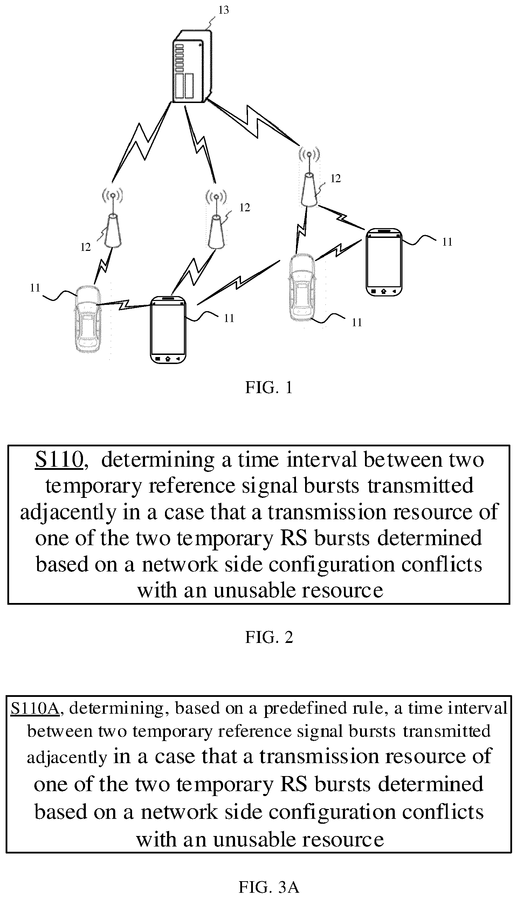

FIG. 1 is a schematic diagram of a wireless communication system according to an embodiment of the disclosure. As illustrated in FIG. 1, the wireless communication system is a communication system based on a cellular mobile communication technology. The wireless communication system may include: a plurality of user equipment (UEs) 11 and a plurality of access devices 12.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (or "cellular" phone), and a computer with an IoT UE. The UE 11 may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 11 may be an unmanned aerial vehicle device. Or, the UE 11 may be an in-vehicle device, for example, an electronic control unit (ECU) having a wireless communication function, or a wireless communication device external to the ECU. Or, the UE 11 can also be a roadside device, for example, a street light, a signal light, or other roadside devices having the wireless communication function.

The access device 12 may be a network side device in the wireless communication system. The wireless communication system may be the 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. The access network in the 5G system may be called a New Generation-RAN (NG-RAN) or a machine type communication (MTC) system.

The access device 12 can be an evolved access device (eNB) employed in the 4G system. Or, the access device 12 may be an access device (gNB) with a centralized distributed architecture employed in the 5G system. When the access device 12 adopts the centralized distributed architecture, it usually includes a Central Unit (CU) and at least two Distributed Units (DUs). The CU is equipped with a protocol stack of a Packet Data Convergence Protocol (PDCP) layer, a Radio Link Control (RLC) layer, and a MAC layer. The DU is equipped with a protocol stack of a physical (PHY) layer, and the specific implementation of the access device 12 is not limited in the embodiments of the disclosure.

A wireless connection can be established between the access device 12 and the UE 11 via a radio interface. In different implementations, the radio interface is a radio interface based on the 4G standard. Or, the radio interface is a radio interface based on the 5G standard, such as a NR. Or, the radio interface may also be a radio interface based on the standard of the next generation of 5G.

In some embodiments, an End to End (E2E) connection can also be established between the UEs 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of access devices 12 are connected to the network management device 13 respectively. The network management device 13 may be a core network device in the wireless communication system, for example, a Mobility Management Entity (MME) in an Evolved Packet Core (EPC). Or, the network management device may be other core network devices, such as a Serving GateWay (SGW), a Public Data Network GateWay (PGW), a Policy and Charging Rules Function (PCRF), or a Home Subscriber Server (HSS), etc. The implementation form of the network management device 13 is not limited in the embodiments of the disclosure.

As illustrated in FIG. 2, an embodiment of the disclosure provides a method for processing a temporary reference signal (RS) burst, which is performed by a terminal. The method includes the following steps.

At step S 110, a time interval between two temporary RS bursts transmitted adjacently is determined in a case that a transmission resource of one of the two temporary RS bursts determined based on a network side configuration conflicts with an unusable resource.

The terminal may be any type of terminal, e.g., a cell phone, a tablet, a wearable device, an in-vehicle device, a smart home device and/or a smart office device. The terminal may be a terminal that supports dual connectivity, which can be connected to a secondary cell (SCell) in addition to a primary cell.

The network side at least includes: a network side of the access network, and the network device of the access network may include a base station.

The base station may send configuration information of the transmission resource of the temporary RS burst in advance through a Radio Resource Control (RRC) signaling or the like. The configuration information is the above network side configuration, and the network side configuration is an RRC configuration. In this way, the terminal can determine the transmission resource of the temporary RS burst based on the RRC signaling.

Certainly, the network side configuration includes, but is not limited to, the configuration information sent through the RRC signaling.

The unusable resource can be any communication resource that cannot be used by the terminal for transmitting the temporary RS burst, which includes, but is not limited to, at least one of:
an Uplink (UL) symbol in a slot structure of a Time Division Duplex (TDD) cell;
a special slot in the slot structure of the TDD cell;
a reserved resource configured by the network side, which includes, but is not limited to, resources for future expansion of the communication system; or
a resource for transmitting a Cell RS (CRS) in scenarios where NR and LTE coexist on the same frequency.

When the terminal determines that the time-frequency domain resource (i.e., the aforementioned transmission resource) for receiving the temporary RS burst determined based on the network side configuration conflicts with the unusable resource before receiving the temporary RS burst, it is necessary to determine a time interval between two temporary RS bursts transmitted adjacently.

In this way, by determining the time interval, a transmission quality of the temporary RS burst can be guaranteed through this time interval. For example, according to the discussion of the RAN 4, it is possible to make the time interval between the two temporary RS bursts sufficiently long in such a scenario when AGC setting and T/F tracking are required to be performed by the terminal according to the two temporary RS bursts, respectively, so as to ensure a reception quality of the temporary RS at the terminal.

As illustrated in FIG. 3A, an embodiment of the present disclosure provides a method for processing a temporary RS burst, which is performed by a terminal. The method includes the following steps.

At step S110A, a time interval between two temporary RS bursts transmitted adjacently is determined based on a predefined rule in a case that a transmission resource of one of the two temporary RS bursts determined based on a network side configuration conflicts with an unusable resource.

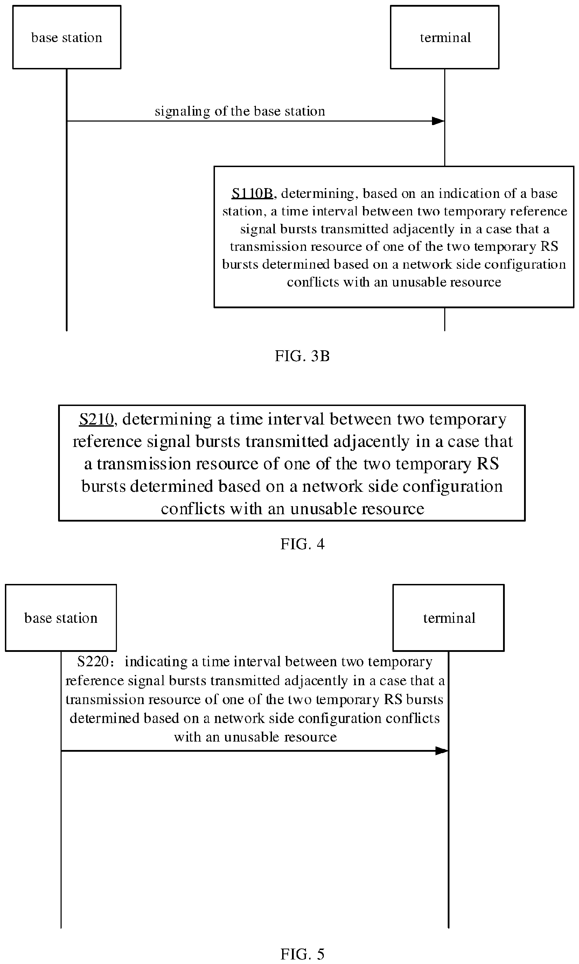

As illustrated in FIG. 3B, an embodiment of the present disclosure provides a method for processing a temporary RS burst, which is performed by a terminal. The method includes the following steps.

At step S 110B, a time interval between two temporary RS bursts transmitted adjacently is determined based on an indication of a base station in a case that a transmission resource of one of the two temporary RS bursts determined based on a network side configuration conflicts with an unusable resource.

The predefined rule may be a defined rule agreed upon by pre-negotiation between the base station and the terminal, a communication rule, or a rule pre-specified by a communication operator.

There are various types of predefined rules, which is not limited to any of the above.

In some embodiments, a specific value of the time interval may be indicated by the base station. In this way, the terminal may determine the time interval between the two temporary RS bursts transmitted adjacently by receiving a signaling sent by the base station.

The signaling sent by the base station may explicitly or implicitly indicate the time interval between the two temporary RS bursts transmitted adjacently.

In an embodiment, if the terminal receives the signaling of the base station that indicates the time interval, the time interval between the two temporary RS bursts transmitted adjacently is determined based on the signaling of the base station. If the terminal does not receive the signaling of the base station that indicates the time interval, the terminal determines the time interval between the two temporary RS bursts transmitted adjacently by itself based on the predefined rule.

In an embodiment, determining, based on the predefined rule, the time interval between the two temporary RS bursts transmitted adjacently includes: determining, based on a minimum time interval between the adjacent two temporary RS bursts stipulated by a RAN 4 protocol and a duplex mode of the terminal, the time interval between the two temporary RS bursts transmitted adjacently.

The predefined rule includes, but is not limited to, the RAN 4 protocol.

The RAN 4 protocol is a communication standard protocol. In embodiments of the disclosure, when determining the time interval, in order to determine a suitable time interval, the time interval between the two temporary RS bursts transmitted adjacently that is suitable for the current duplex mode of the terminal is determined based on the minimum time interval between the transmitted adjacently two temporary RS bursts stipulated by the RAN 4 protocol and the current duplex mode of the terminal. Therefore, it is ensured that the determined time interval is sufficient to ensure that the terminal has enough time to receive each temporary RS burst, thereby ensuring the reception quality.

In an embodiment, determining, based on the minimum time interval between the adjacent two temporary RS bursts stipulated by the RAN 4 protocol and the duplex mode of the terminal, the time interval between the two temporary RS bursts transmitted adjacently, includes:
in response to the duplex mode of the terminal being a frequency division duplexing (FDD) mode, determining the time interval between the two temporary RS bursts transmitted adjacently as a first time interval; or
in response to the duplex mode of the terminal being a TDD mode, determining the time interval between the two temporary RS bursts transmitted adjacently as a maximum value of a first time interval and a second time interval based on a TDD UL and downlink (DL) slot structure;
in which, the first time interval is a minimum time interval between adjacent temporary RS bursts stipulated by the RAN 4 protocol; and
the second time interval is a time interval between two non-consecutive downlink slots in a TDD frequency band or a time interval between two non-consecutive downlink symbols.

In some of the following embodiments, the first time interval may be represented by G, and the second time interval may be represented by L.

If the current duplex mode of the terminal is the FDD mode, i.e., UL and DL of the terminal use different frequency points, an UL slot and a DL slots of the terminal are distributed on different frequency points without interference. In this case, the minimum time interval stipulated by the RAN 4 protocol can be used directly as the time interval between the two temporary RS bursts transmitted adjacently. Certainly, in some embodiments, based on the type of the terminal, the time interval between the two temporary RS bursts transmitted adjacently can be slightly greater than G, for example, a*G, in which a can be any positive integer greater than 1 and less than 2.

In another embodiment, if the terminal operates in the TDD mode, the UL slot, DL slot, and special slot of the TDD cell are located on the same frequency point. In this case, it is necessary to consider that the UL slot and/or special slot cannot be used for the transmission of the temporary RS burst. The time interval between the two temporary RS bursts transmitted adjacently is determined in combination with the maximum value of the minimum time interval (i.e., G) required by the terminal and the time interval between two non-consecutive downlink slots in the TDD frequency band or the time interval between two non-consecutive downlink symbols. The time interval between the two temporary RS bursts transmitted adjacently determined in this manner takes into account the time required by the terminal to process the two temporary RS bursts, as well as the slot structure in the TDD mode.

In some embodiments, determining, based on the indication of the base station, the time interval between the two temporary RS bursts transmitted adjacently, includes at least one of:
determining, based on interval indication information included in a signaling of the base station, the time interval between the two temporary RS bursts transmitted adjacently, in which the interval indication information indicates the time interval; or,
determining, based on a correspondence between a signaling of the base station and a value of the time interval, the time interval between the adjacent two temporary RS bursts.

In some embodiments, the signaling of the base station directly includes the interval indication information, which occupies one or more bits. In this way, the terminal can determine the time interval between the two temporary RS bursts transmitted adjacently directly based on the interval indication information carried by the signaling of the base station.

In other embodiments, the signaling of the base station does not carry the interval indication information, but there is a correspondence between information content carried by the signaling of the base station or a transmission parameter of the signaling of the base station and a value of the time interval. The transmission parameter includes, but is not limited to: a transmission resource, a signaling format, and/or a signaling type. For example, different signaling formats correspond to different lengths and/or internal structures of the signaling of the base station. The signaling type may be determined according to a corresponding network layer, such as, a MAC signaling, an RRC signaling and/or a PHY signaling.

Therefore, after receiving the signaling of the base station that has a correspondence with a value of the time interval, the terminal determines, based on the correspondence between the signaling content of the signaling of the base station and the value of the time interval, or, the correspondence between the transmission parameter of the signaling of the base station and the value of the time interval, the value of the time interval corresponding to the received signaling of the base station as the time interval between the two temporary RS bursts transmitted adjacently.

The transmission parameter may include: a location of the transmission resource, a scrambling sequence used for transmission, a transmission format of the signaling of the base station, and a Modulation and Coding Scheme (MCS) of the signaling of the base station.

If the signaling of the base station is used for implicit indication, i.e., no dedicated bit in the signaling is occupied, so as to implicitly indicate the value of the time interval.

In an embodiment, the signaling of the base station includes at least one of:
Downlink Control Information (DCI); or
a MAC CE.

The DCI is a PHY signaling and has a characteristic of good dynamics.

The MAC CE is a MAC signaling, which has a better flexibility to carry contents compared to the DCI, and is more dynamic compared to the RRC signaling.

With the characteristic of good dynamics of the DCI and/or MAC CE, fast indication of the time interval can be realized for the terminal.

In an embodiment, the DCI includes: DCI for scheduling a PDSCH of a SCell activation MAC CE.

If the DCI for scheduling the PDSCH of the SCell activation MAC CE is used to indicate the time interval, the indication of the time interval between the two temporary RS bursts transmitted adjacently is realized while scheduling the transmission resource of the SCell activation MAC CE. In this way, when there is a conflict between the transmission resource for the temporary RS burst of the activated SCell and other unusable resources, the time interval can be learned in advance directly according to the DCI, and there is no need to determine it by waiting for the signaling of the base station.

The DCI for scheduling the PDSCH of the SCell activation MAC CE includes: resource information that indicates the PDSCH for transmitting the SCell activation MAC CE.

In an embodiment, the MAC CE carries the interval indication information; or
the MAC CE carries temporary RS triggering information to implicitly indicate the time interval.

If the MAC CE is used to indicate the time interval, the time interval can be explicitly indicated by the interval indication information carried by the MAC CE or implicitly indicated by the temporary RS information carried by the MAC CE.

The temporary RS triggering information may include: a triggering instruction that triggers the transmission of the temporary RS burst. In this case, the MAC CE, while triggering the transmission of the temporary RS burst, instructs the terminal to receive the two temporary RS bursts transmitted adjacently by the base station based on the time interval corresponding to the temporal RS triggering information of the temporary RS burst when there is the conflict between the transmission resource of the temporary RS burst and the unusable resource.

In an embodiment, the temporary RS triggering information is used to determine relevant information of the temporary RS. The relevant information is pre-configured by a RRC signaling and includes the interval indication information that indicates the time interval.

For example, before the transmission of the MAC CE, the base station may send the RRC signaling in advance for pre-configuring the transmission of the temporary RS burst. For example, the RRC signaling is pre-configured with one or more pieces of the interval indication information of the time interval. The temporary RS triggering information may be of various kinds, and different kinds of temporary RS triggering information will trigger the terminal to receive the temporary RS. Meanwhile, according to the relevant information corresponding to the temporary RS triggering information, the interval indication information carried in the RRC signaling is obtained and the transmission interval between the two temporary RS bursts transmitted adjacently can be learned.

If the above signaling of the base station is DCI, the DCI carries the interval indication information that indicates a value of the time interval.

The value of the time interval indicated by the interval indication information is a value located in a value set configured by the RRC signaling, or, a value located in a value set predefined by a protocol.

For example, the DCI may carry a bit map in which one bit may indicate a value. The value may be carried in the RRC signaling for configuring the transmission of the temporary RS burst.

As another example, the DCI contains an indication value, and different indication values correspond to different values of the time interval, so that the terminal, after receiving the DCI, can know the time interval between the transmitted adjacently two temporary RS bursts indicated by the base station.

As illustrated in FIG. 4, an embodiment of the present disclosure provides a method for processing a temporary RS burst, which is performed by a base station. The method includes the following steps.

At step S210, a time interval between two temporary RS bursts transmitted adjacently is determined in a case that a transmission resource of one of the two temporary RS bursts determined based on a network side configuration conflicts with an unusable resource.

The method for processing a temporary RS burst provided by this embodiment of the disclosure is applied to the base station on the network side. The method includes: determining the time interval between the two temporary RS bursts transmitted adjacently in a case that the transmission resource of one of the two temporary RS bursts determined based on the determined or issued network side configuration conflicts with the unusable resource.

In this way, when the base station sends the temporary RS burst in accordance with the determined time interval, the terminal has a sufficient time interval to be ready to receive the latter temporary RS burst after processing the former temporary RS burst of the transmitted adjacently temporary RS bursts, so that it can be ensured that the transmission of the two temporary RS bursts transmitted adjacently can be successful, thereby ensuring the success rate of the transmission of the temporary RS burst.

In some embodiments, step S210 may include:
determining, based on a predefined rule, the time interval between the two temporary RS bursts transmitted adjacently in a case that the transmission resource of one of the two temporary RS bursts determined based on the network side configuration conflicts with the unusable resource.

The base station may determine, based on the predefined rule, the time interval between the two temporary RS bursts transmitted adjacently. The predefined rule may be pre-defined by the base station, determined based on a pre-configuration received from an upper layer device such as a network management device, or pre-defined according to a communication protocol.

Certainly, the above are only examples, and the rule may be pre-defined in various ways, which are not limited to any of the above.

As illustrated in FIG. 5, an embodiment of the present disclosure provides a method for processing a temporary RS burst. The method includes the following steps.

At step S220, a time interval between two temporary RS bursts transmitted adjacently is indicated in a case that a transmission resource of one of the two temporary RS bursts determined based on a network side configuration conflicts with an unusable resource.

In some embodiments, the time interval may be the time interval determined in the preceding step S210, or may be predetermined by the base station or received from an upper layer device such as a network management device.

In conclusion, after determining the time interval, the base station indicates the time interval to the terminal. The indication of the base station may be in an explicit way or an implicit way. The base station indicates the time interval determined by itself to the terminal, and subsequently the terminal receives the temporary RS burst according to the time interval.

In some embodiments, step S220 may include:
sending interval indication information for explicitly indicating the time interval.

The time interval is indicated explicitly by the interval indication information, the interval indication information individually occupies at least one or more bits whose bit values are used to indicate the value of the time interval.

If the base station explicitly indicates the time interval through the interval indication information, a signaling carrying the interval indication information is sent.

For example, the interval indication information is carried in DCI or a MAC CE.

The interval indication information may be carried in the DCI or MAC CE with good dynamics, so that the terminal can receive the time interval indicated by the base station in time.

In some embodiments, the DCI includes: DCI for scheduling a PDSCH of a SCell activation MAC CE.

The DCI for scheduling the PDSCH of the SCell activation MAC CE also carries the interval indication information, so that the terminal can know the time interval between the two temporary RS bursts transmitted adjacently directly according to the DCI when the temporary RS burst is used for AGC adjustment and/or T/F tracking.

In some embodiments, the MAC CE carries temporary RS triggering information to implicitly indicate the time interval. The MAC CE does not directly indicate the time interval, but implicitly indicates the time interval. For example, the MAC CE that triggers the transmission of the temporary RS burst is used to indicate the time interval.

In some embodiments, the MAC CE carries the interval indication information.

In some embodiments, the temporary RS triggering information is used by the terminal to determine relevant information of the temporary RS. The relevant information is information pre-configured by a RRC signaling. The relevant information includes information of the time interval.

The relevant information is sent to the terminal via the RRC signaling in advance (i.e., it is configured via the RRC signaling in advance), so that the terminal receives the relevant information in advance based on the RRC signaling. After receiving the MAC CE carrying the temporary RS triggering information, it determines the relevant information according to the MAC CE, and then determines the time interval based on the relevant information.

In some embodiments, determining, based on the predefined rule, the time interval between the two temporary RS bursts transmitted adjacently, includes:
determining, based on a minimum time interval between the adjacent two temporary RS bursts stipulated by a RAN 4 protocol and a duplex mode of the terminal, the time interval between the two temporary RS bursts transmitted adjacently.

In some embodiments, determining, based on the minimum time interval between the adjacent two temporary RS bursts stipulated by the RAN 4 protocol and the duplex mode of the terminal, the time interval between the two temporary RS bursts transmitted adjacently, includes:
in response to the duplex mode of the terminal being a FDD mode, determining the time interval between the two temporary RS bursts transmitted adjacently as a first time interval; or
in response to the duplex mode of the terminal being a TDD mode, determining the time interval between the two temporary RS bursts transmitted adjacently as a maximum value of a first time interval and a second time interval based on a TDD uplink and downlink slot structure;
in which, the first time interval is a minimum time interval between adjacent temporary RS bursts stipulated by the RAN 4 protocol; and
the second time interval is a time interval between two non-consecutive downlink slots in a TDD frequency band or a time interval between two non-consecutive downlink symbols.

Similarly, when determining the time interval, the base station determines the time interval between the two temporary RS bursts transmitted adjacently with reference to the RAN 4 protocol and the duplex mode in which the terminal is currently operating.

In some embodiments, when determining the time interval between the two temporary RS bursts transmitted adjacently, in addition to the minimum time interval stipulated by the RAN 4 protocol and the duplex mode in which the terminal is currently operating, the base station further depends on a capability of the terminal to determine the time interval between the adjacent transmissions of the two temporary RS bursts.

An RS burst of the TRS contains one or two consecutive slots each containing 2 temporary RS samples. A time-frequency domain transmission resource of the TRS within a slot is configured by RRC.

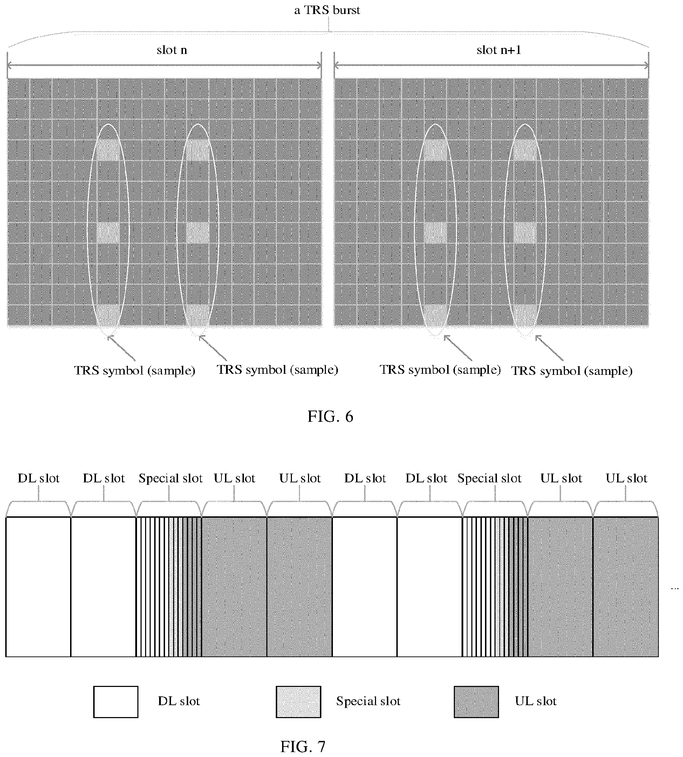

Taking FR1 as an example, its pattern within an RS burst can be shown in FIG. 6. The density of RS Resource Elements (REs) of the TRS is fixed and the TRS is transmitted with a single port.

As illustrated in FIG. 6, a TRS burst spans two slots in the time domain. Two TRS samples within the TRS burst are transmitted within a slot n, and two TRS samples within the TRS burst are transmitted within a slot (n+1).

The network side indicates the time interval (GAP) between two temporary RS bursts to the terminal through an explicit signaling or in an implicit way.

There are various ways of determining the time interval, and several optional ways are provided below.

Option 1: the terminal side determines the time interval between two temporary RS bursts according to a predefined rule.

The terminal determines the time interval between the two temporary RS bursts according to a minimum time interval between temporary RS bursts defined by the RAN 4 protocol and an UL and DL slot ratio.

If the current frequency band is the FDD frequency band, the time interval between the two temporary RS bursts is a minimum value G defined by the RAN 4 protocol.

G includes several slots or several milliseconds (ms).

If the current frequency band is the TDD frequency band, the time interval between the two temporary RS bursts is max(G, L).

L is the time interval between two non-consecutive DL slots or DL symbols in the time domain.

Option 2: the terminal side determines the time interval between the two temporary RS bursts according to an indication signaling sent by the base station.

Option 2.1: the terminal determines a specific value of the time interval according to interval indication information carried by the base station in DCI.

The DCI may be DCI for scheduling a PDSCH of a SCell activation MAC CE.

The interval indication information carried in the DCI is a value set configured by the RRC signaling, which includes one or more alternative values of the time interval. The MAC CE may carry a serial number of the value of the time interval which takes effect finally. Certainly, this is only an example and the implementation is not limited herein.

Alternatively, the interval indication information carried in the DCI is a value set predefined by a protocol.

The value set includes one or more values of the time interval. Option 2.2: the terminal determines a specific value of the time interval according to interval indication information carried by the base station in a MAC CE that triggers the temporary RS. The MAC CE that triggers the temporary RS may be a MAC CE that triggers transmission of the temporary RS.

The time interval between the temporary RS bursts is indicated explicitly by bits carried in the MAC CE.

Alternatively, the time interval between the temporary RS bursts is implicitly indicated by temporary RS triggering information carried in the MAC CE.

The terminal obtains relevant information of the triggered temporary RS through the temporary RS triggering information. The relevant information includes information of the time interval between the temporary RS bursts.

The relevant information of the temporary RS can be configured by the RRC signaling.

For the network side, determining the time interval between the two temporary reference signal bursts transmitted adjacently may include:
the network side determining, based on a pre-defined rule, the time interval between the two temporary reference signal bursts.

The network side indicates the time interval between the two temporary RS bursts to the terminal based on the indication signaling sent by the base station.

Assuming that a cell is a TDD cell, the network side configures TDD UL and DL configuration through a System Information Block (SIB) or a UE-dedicated RRC signaling. In this embodiment, it is assumed that the TDD UL and DL configuration configured by the network side is a single cycle, and the specific slot structure is DDSUU, SCS=15 kHz. D represents a DL slot, U represents a UL slot, and S represents a special slot. FIG. 7 shows a slot structure of the TDD cell.

Assuming that the UL and DL slot structure of the special slot (S) is 7D 3F 4U, i.e., it contains 7 DL symbols, 3 flexible symbols, and 4 UL symbols.

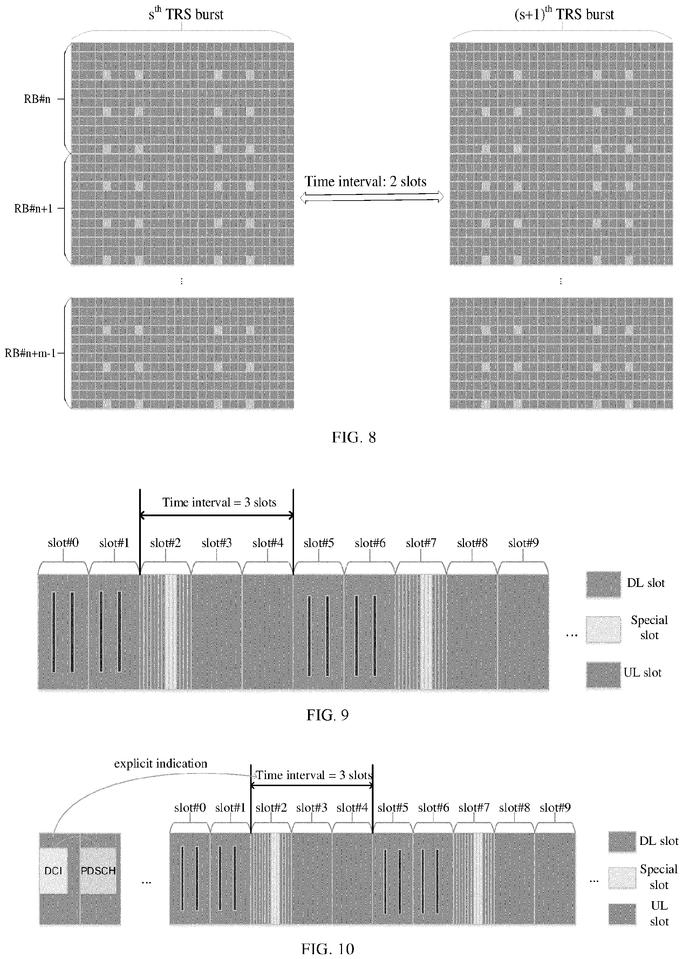

Assuming that the temporary RS triggered by the network side for SCell activation contains 2 bursts, each burst contains 4 temporary RS samples on 2 consecutive DL slots, and the time interval between two bursts as defined by the RAN 4 protocol is 2 slots. In this embodiment, assuming that the a pattern of the temporary RS burst is shown in FIG. 8, he temporary RS burst occupies m Resource Blocks (RBs) in the frequency domain, and 2 OFDM symbols #4 and #8 within each slot.

The s^{th} TRS burst and the (s+1)^{th} TRS burst in FIG. 8 are one of the aforementioned temporary RS bursts. As shown in FIG. 8, one TRS is sent every four REs within the slots from RB#n to RB#n+m-1. The transmission resource shown in FIG. 8 is represented by taking a horizontal axis as a time axis and a vertical axis as a frequency axis.

There are 2 slots between the s^{th} TRS burst and the (s+1)^{th} TRS burst.

The TRS burst here is one kind of the above temporary RS bursts, but the temporary RS burst is not limited to the TRS burst.

Assuming that the base station indicates that the transmission of the temporary RS burst starts at a slot #0, the base station ensures successful transmission of the n^{th} temporary RS burst and the (n+1)^{th} temporary RS burst over DL resources in the following way.

The base station and the terminal determine the actual time interval between two temporary RS bursts during transmission according to the minimum time interval between the temporary RS bursts defined by the RAN 4 protocol and the time interval between non-consecutive DL slots. For example, in this embodiment, the minimum time interval between the temporary RS bursts defined by the RAN 4 protocol is G=2 slots, and the time interval between the non-consecutive DL slots is L=3 slots, so that the actual time interval between the two temporary RS bursts during transmission is max (G, L)=3 slots.

The time-frequency domain location of the temporary RS burst during actual transmission may be shown with reference to FIG. 9. There can be 3 slots between the n^{th} temporary RS burst and the (n+1)^{th} temporary RS burst.

It should be noted that the minimum interval between two temporary RS bursts defined by the RAN 4 protocol can also be defined in the unit of ms, in which case the minimum time interval between two temporary RS bursts should be determined using the above-mentioned method by converting m seconds (s) into a number of slots in accordance with a Subcarrier Space (SCS) of a Bandwidth Part (BWP) where transmission of the temporary RS is located.

Assuming that the cell is an FDD cell, the minimum time interval between two temporary RS bursts is determined by the minimum value defined by the RAN 4 protocol, e.g., 2 slots or the number of slots contained in the time length of 2 ms.

Assuming that two temporary RS bursts are triggered by the network side for AGC setting and T/F tracking, respectively, the base station indicates the time interval between the two temporary RS bursts triggered by the base station by the interval indication information carried in the DCI for scheduling the PDSCH carrying the SCell activation MAC CE and/or temporary RS triggering information. For example, the network side indicates the time interval between the temporary RS bursts through the interval indication information of N bits carried in the DCI.

In this embodiment, it is assumed that N=2.

As illustrated in FIG. 10, the interval indication information that occupies 2 bits is carried by the DCI, which explicitly indicates the time interval between the two temporary RS bursts transmitted adjacently. The time interval indicated by the interval indication information carried by the DCI in FIG. 10 is 3 slots.

The correspondence between the interval indication information that occupies 2 bits and is carried in the DCI and the time interval of RS bursts is shown in Table 1.

**Table 1**

| Bit value of 2 bits | Value of the time interval |
|---|---|
| 00 | 2 |
| 01 | 3 |
| 10 | 4 |
| 11 | 5 |

The correspondence between the interval indication information of temporary RS bursts and the time interval of RS bursts defined in Table 1 is determined by a predefined protocol or configured by a RRC signaling.

It should be noted that Table 1 shows only an example of the correspondence between the interval indication information of the RS burst and the value of the time interval in this embodiment, a combination of any correspondences is not excluded in the embodiments of the disclosure. That is, the RRC signaling can be used to configure any value set, and the protocol can be used to define any value set. In addition, any of the elements of Table 1 may be used alone or in combination with one or more other elements.

It is assumed that the network side triggers two temporary RS bursts, respectively for AGC setting and T/F tracking. The base station indicates the time interval between the two temporary RS bursts triggered by the base station through the interval indication information carried in the MAC CE. For example, the network side indicates the time interval between the temporary RS bursts through the interval indication information of N bits carried in the MAC CE.

In this embodiment, it is assumed that N=2.

The MAC CE is used to trigger the temporary RS. When the temporary RS is triggered, the temporary RS is transmitted between the base station and the terminal.

The correspondence between the interval indication information that occupies 2 bits and is carried in the MAC CE and the time interval of temporary RS bursts is shown in Table 2.

**Table 2**

| Bit value of 2 bits | Value of the time interval |
|---|---|
| 00 | 2 |
| 01 | 3 |
| 10 | 4 |
| 11 | 5 |

The correspondence between the interval indication information of temporary RS bursts and the time interval of temporary RS bursts defined in Table 2 is determined by the predefined protocol or configured by the RRC signaling.

It should be noted that this embodiment shows only an example of the correspondence between the interval indication information of temporary RS bursts and the value of the time interval, while a combination of any correspondences is not excluded in the embodiments of the disclosure. That is, the RRC signaling can be used to configure any value set, and the protocol can be used to define any value set. In addition, any of the elements of Table 2 may be used alone or in combination with one or more other elements.

It is assumed that the network side triggers two temporary RS bursts, respectively for AGC setting and T/F tracking. The base station indicates the time interval between the two temporary RS bursts triggered by the base station through interval indication information carried in the MAC CE.

For example, the network side implicitly indicates the time interval between the temporary RS bursts through temporary RS triggering information carried in the MAC CE.

For example, when configuring the temporary RS, the network side needs to configure the time interval between the temporary RS bursts for each set of temporary RS resources. Through the temporary RS triggering information carried in the MAC CE, the network side determines a temporary RS configuration in a RRC signaling configuration list for the activated temporary RS. The corresponding temporary RS configuration is determined according to a configuration serial number and includes information of the time interval between the temporary RS bursts.

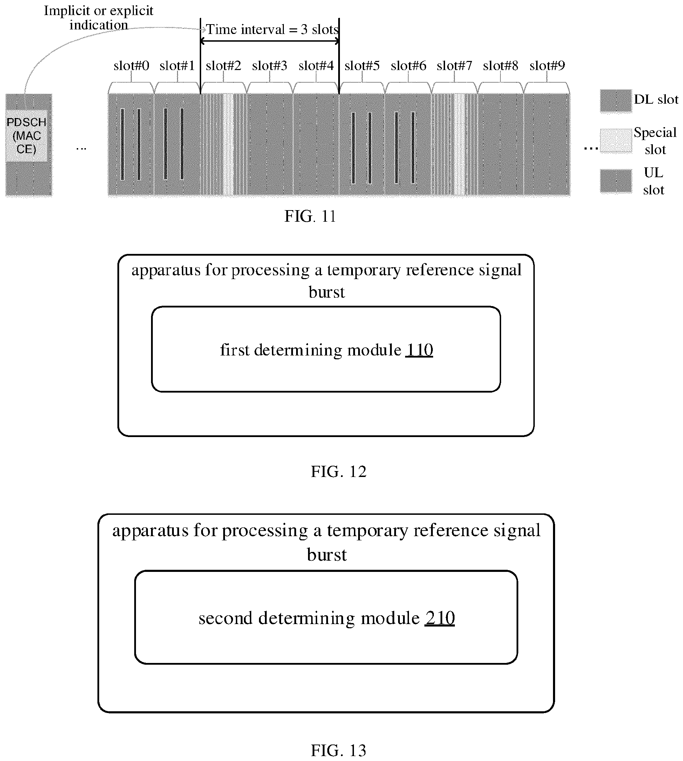

As illustrated in FIG. 11, the MAC CE may implicitly indicate or explicitly indicate the time interval between the two temporary RS bursts transmitted adjacently. The time interval indicated by the MAC CE in FIG. 11 is 3 slots.

As illustrated in FIG. 12, an embodiment of the disclosure provides an apparatus for processing a temporary RS burst. The apparatus includes:
a first determining module 110, configured to, determine a time interval between two temporary RS bursts transmitted adjacently in a case that a transmission resource of one of the two temporary RS bursts determined based on a network side configuration conflicts with an unusable resource.

The apparatus for processing a temporary RS burst can be included in a terminal.

In some embodiments, the first determining module 110 may be a program module. After being executed by a processor, the program module can determine the time interval between two temporary RS bursts when the transmission resource of one of two temporary RS bursts indicated by the network side configuration conflicts with the unusable resource, and receive the temporary RS burst at the determined time interval, thereby ensuring a success rate of reception of the terminal.

In other embodiments, the first determining module 110 may be a hardware and software combination module, which includes, but is not limited to, a variety of programmable arrays. The programmable arrays include, but are not limited to, field programmable arrays and/or complex programmable arrays.

In some embodiments, the first determining module 110 may be a pure hardware module, which includes, but is not limited to, an Application Specific Integrated Circuit (ASIC).

In some embodiments, the first determining module 110 is configured to perform at least one of the following processes of:
determining, based on a predefined rule, the time interval between the two temporary RS bursts transmitted adjacently in a case that the transmission resource of one of the two temporary RS bursts determined based on the network side configuration conflicts with the unusable resource; or,
determining, based on an indication of a base station, the time interval between the two temporary RS bursts transmitted adjacently in a case that the transmission resource of one of the two temporary RS bursts determined based on the network side configuration conflicts with the unusable resource.

In some embodiments, the first determining module 110 is configured to: determine, based on a minimum time interval between the adjacent two temporary RS bursts stipulated by a Random Access Network (RAN) 4 protocol and a duplex mode of the terminal, the time interval between the two temporary RS bursts transmitted adjacently.

In some embodiments, the first determining module 110 is configured to: in response to the duplex mode of the terminal being a frequency division duplexing (FDD) mode, determine the time interval between the two temporary RS bursts transmitted adjacently as a first time interval; or, in response to the duplex mode of the terminal being a time division duplex (TDD) mode, determine, based on a TDD uplink and downlink slot structure, the time interval between the two temporary RS bursts transmitted adjacently as a maximum value of a first time interval and a second time interval;
in which, the first time interval is a minimum time interval between adjacent temporary RS bursts stipulated by the RAN 4 protocol; and
the second time interval is a time interval between two non-consecutive downlink slots in a TDD frequency band or a time interval between two non-consecutive downlink symbols.

In some embodiments, the first determining module 110 is configured to perform at least one of the following processes of:
determining, based on interval indication information included in a signaling of the base station, the time interval between the two temporary RS bursts transmitted adjacently, in which the interval indication information indicates the time interval; or
determining the time interval between the adjacent two temporary RS bursts based on a correspondence between a signaling of the base station and a value of the time interval.

In some embodiments, the signaling of the base station includes at least one of:
DCI; or
a MAC CE.

In some embodiments, the DCI includes: DCI of a PDSCH for scheduling a SCell activation MAC CE.

In some embodiments, the MAC CE carries the interval indication information; or
the MAC CE carries temporary RS triggering information to implicitly indicate the time interval.

In some embodiments, the temporary reference signal triggering information is configured to determine relevant information of a temporary RS, in which the relevant information is pre-configured by a RRC signaling and includes the interval indication information for indicating the time interval.

In some embodiments, the DCI carries the interval indication information that indicates a value of the time interval;
in which, the value of the time interval indicated by the interval indication information is a value located in a value set configured by the RRC signaling, or, a value located in a value set predefined by a protocol.

As illustrated in FIG. 13, an embodiment of the disclosure provides an apparatus for processing a temporary RS burst. The apparatus includes:
a second determining module 210, configured to determine a time interval between two temporary RS bursts transmitted adjacently in a case that a transmission resource of one of the two temporary RS bursts determined based on a network side configuration conflicts with an unusable resource.

The apparatus for processing a temporary RS burst can be included in a base station.

In some embodiments, the second determining module 210 may be a program module. After being executed by a processor, the program module can determine the time interval between two temporary RS bursts when the transmission resource of one of two temporary RS bursts indicated by the network side configuration conflicts with the unusable resource, and send the temporary RS burst at the determined time interval, thereby ensuring a success rate of reception of the terminal.

In some embodiments, the second determining module 210 may be a hardware and software combination module, which includes, but is not limited to, a variety of programmable arrays. The programmable arrays include, but are not limited to, field programmable arrays and/or complex programmable arrays.

In some embodiments, the second determining module 210 may be a pure hardware module, which includes, but is not limited to, an ASIC.

In some embodiments, the second determining module 210 is configured to determine, based on a predefined rule, the time interval between the two temporary RS bursts transmitted adjacently in a case that the transmission resource of one of the two temporary RS bursts determined based on the network side configuration conflicts with the unusable resource.

In some embodiments, the apparatus further includes:
an indicating module, configured to indicate the time interval in a case that the transmission resource of one of the two temporary RS bursts determined based on the network side configuration conflicts with the unusable resource.

In some embodiments, the indicating module is configured to send interval indication information for explicitly indicating the time interval.

In some embodiments, the interval indication information is carried in DCI or a MAC CE.

In some embodiments, the DCI includes: DCI for scheduling a PDSCH of a SCell activation MAC CE.

In some embodiments, the MAC CE carries temporary RS triggering information to implicitly indicate the time interval.

In some embodiments, the MAC CE carries the interval indication information.

In some embodiments, the temporary RS triggering information is used for a terminal to determine relevant information of a temporary RS, in which the relevant information is information pre-configured by a RRC signaling and includes the time interval information.

In some embodiments, the second determining module 210 is configured to determine, based on a minimum time interval between the adjacent two temporary RS bursts stipulated by a Random Access Network (RAN) 4 protocol and a duplex mode of the terminal, the time interval between the two temporary RS bursts transmitted adjacently.

In some embodiments, the second determining module 210 is configured to, in response to the duplex mode of the terminal being a frequency division duplexing (FDD) mode, determine the time interval between the two temporary RS bursts transmitted adjacently as a first time interval; or, in response to the duplex mode of the terminal being a time division duplex (TDD) mode, determine, based on a TDD uplink and downlink slot structure, the time interval between the two temporary RS bursts transmitted adjacently as a maximum value of a first time interval and a second time interval;
in which, the first time interval is a minimum time interval between adjacent temporary RS bursts stipulated by the RAN 4 protocol; and
the second time interval is a time interval between two non-consecutive downlink slots in a TDD frequency band or a time interval between two non-consecutive downlink symbols.

Embodiments of the disclosure provides a communication device, including:
a memory for storing instructions executable by a processor;
the processor connected to the memory;
in which, the processor is configured to perform the method for processing a temporary RS burst provided by any of the foregoing technical solutions.

The processor may include various types of storage mediums that are non-transitory computer storage medium capable of continuing to memorize information stored thereon after the communication device is powered down.

The communication device includes: a terminal or a base station.

The processor may be connected to the memory via a bus or the like for reading executable programs stored on the memory, e.g., at least one of the methods shown in FIG. 2, FIGS. 3A to 3B, and FIGS. 4 to 5.

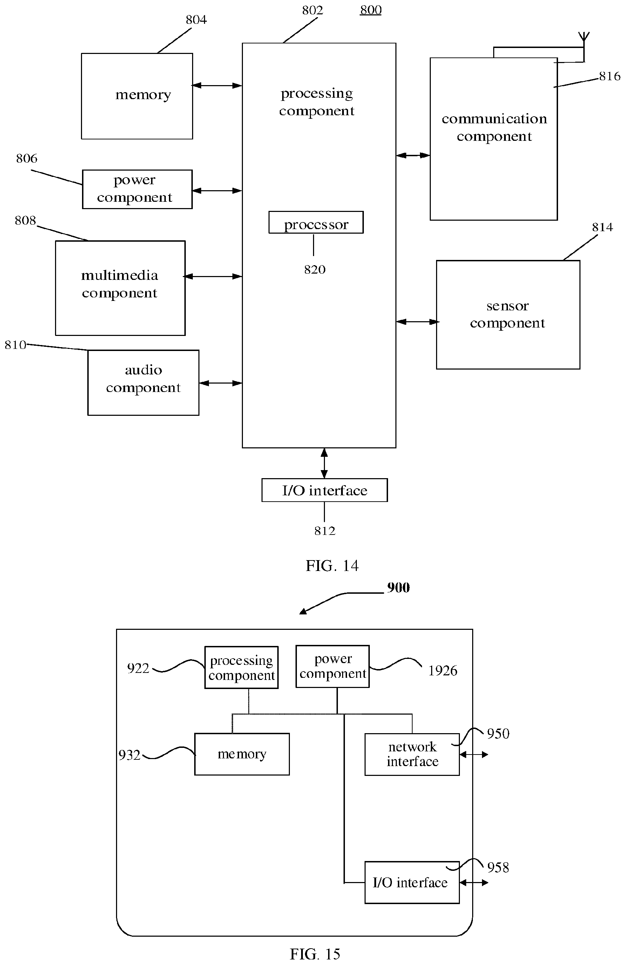

FIG. 14 is a block diagram of a terminal 800 according to an embodiment. For example, the terminal 800 may be a mobile phone, a computer, a digital broadcasting UE, a message transceiver device, a game console, a tablet device, a medical device, a fitness device and a personal digital assistant.

As illustrated in FIG. 14, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations and recording operations. The processing component 802 may include one or more processors 820 to execute instructions to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a Complementary Metal Oxide Semiconductor (CMOS) or a Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as Wi-Fi, 2G or 3G, or a combination thereof. In an embodiment, the communication component 816 receives a broadcast signal from an external broadcast management system or broadcast associated information via a broadcast channel. In an embodiment, the communication component 816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an exemplary embodiment, the terminal 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In the exemplary embodiments, there is also provided a non-transitory computer readable storage medium including instructions, such as the memory 804, executable by the processor 820 in the terminal 800, for performing the above method. For example, the non-transitory computer-readable storage medium may be a ROM, a Random Access Memory (RAM), a CD-ROM, a magnetic tape, a floppy disc, and an optical data storage device.

As illustrated in FIG. 15, an embodiment of the disclosure illustrates an architecture of a base station, which can be used to implement any method for processing a temporary RS burst applied to the base station.

As illustrated in FIG. 15, the base station 900 includes a processing component 922 consisting of one or more processors, and memory resources represented by a memory 932 for storing instructions that may be executed by the processing component 922, such as applications. The applications stored in the memory 932 may include one or more modules each corresponding to a set of instructions. In addition, the processing component 922 is configured to implement the method for processing a temporary RS burst applied to the base station or the terminal as described above, for example, at least one of the methods shown in FIG. 2, FIGS. 3A to 3B, and FIGS. 4 to 5.

The base station 900 may also include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server^{™}, Mac OS X^{™}, Unix^{™}, LinuxTM, FreeBSD^{™}, or the like.

Other implementations of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing a temporary reference signal (RS) burst, performed by a terminal, comprising:
determining a time interval between two temporary RS bursts transmitted adjacently in a case that a transmission resource of one of the two temporary RS bursts determined based on a network side configuration conflicts with an unusable resource.

2. The method of claim 1, wherein determining the time interval between two temporary RS bursts transmitted adjacently in the case that the transmission resource of one of the two temporary RS bursts determined based on the network side configuration conflicts with the unusable resource comprises at least one of:
determining, based on a predefined rule, the time interval between the two temporary RS bursts transmitted adjacently in the case that the transmission resource of one of the two temporary RS bursts determined based on the network side configuration conflicts with the unusable resource; or
determining, based on an indication of a base station, the time interval between the two temporary RS bursts transmitted adjacently in the case that the transmission resource of one of the two temporary RS bursts determined based on the network side configuration conflicts with the unusable resource.

3. The method of claim 2, wherein determining, based on the predefined rule, the time interval between the two temporary RS bursts transmitted adjacently, comprises:
determining, based on a minimum time interval between the adjacent two temporary RS bursts stipulated by a Random Access Network (RAN) 4 protocol and a duplex mode of the terminal, the time interval between the two temporary RS bursts transmitted adjacently.

4. The method of claim 3, wherein determining, based on the minimum time interval between the adjacent two temporary RS bursts stipulated by the RAN 4 protocol and the duplex mode of the terminal, the time interval between the two temporary RS bursts transmitted adjacently comprises:
in response to the duplex mode of the terminal being a frequency division duplexing (FDD) mode, determining the time interval between the two temporary RS bursts transmitted adjacently as a first time interval; or
in response to the duplex mode of the terminal being a time division duplex (TDD) mode, determining, based on a TDD uplink and downlink slot structure, the time interval between the two temporary RS bursts transmitted adjacently as a maximum value of a first time interval and a second time interval;
wherein the first time interval is the minimum time interval between the adjacent temporary RS bursts stipulated by the RAN 4 protocol; and
the second time interval is a time interval between two non-consecutive downlink slots in a TDD frequency band or a time interval between two non-consecutive downlink symbols.

5. The method of claim 2, wherein determining, based on the indication of the base station, the time interval between the two temporary RS bursts transmitted adjacently comprises at least one of:
determining, based on interval indication information included in a signaling of the base station, the time interval between the two temporary RS bursts transmitted adjacently, wherein the interval indication information indicates the time interval; or
determining the time interval between the adjacent two temporary RS bursts based on a correspondence between a signaling of the base station and a value of the time interval.

6. The method of claim 5, wherein the signaling of the base station comprises at least one of:
Downlink Control Information (DCI); or
a Media Access Control (MAC) Control Element (CE).

7. The method of claim 6, wherein the DCI comprises: DCI for scheduling a Physical Downlink Shared Channel (PDSCH) of a secondary cell (SCell) activation MAC CE.

8. The method of claim 6, wherein the MAC CE carries the interval indication information; or,
the MAC CE carries temporary RS triggering information to implicitly indicate the time interval.

9. The method of claim 8, wherein the temporary RS triggering information is configured to determine relevant information of a temporary RS, wherein the relevant information is pre-configured by a Radio Resource Control (RRC) signaling and comprises the interval indication information for indicating the time interval.

10. The method of any one of claims 6-9, wherein the DCI carries the interval indication information, and the interval indication information indicates a value of the time interval;
wherein the value of the time interval indicated by the interval indication information is a value located in a value set configured by the RRC signaling, or a value located in a value set predefined by a protocol.

11. A method for processing a temporary reference signal (RS) burst, performed by a base station, comprising:
determining a time interval between two temporary RS bursts transmitted adjacently in a case that a transmission resource of one of the two temporary RS bursts determined based on a network side configuration conflicts with an unusable resource.

12. The method of claim 11, wherein determining the time interval between two temporary RS bursts transmitted adjacently in the case that the transmission resource of one of the two temporary RS bursts determined based on the network side configuration conflicts with the unusable resource comprises:
determining, based on a predefined rule, the time interval between the two temporary RS bursts transmitted adjacently in the case that the transmission resource of one of the two temporary RS bursts determined based on the network side configuration conflicts with the unusable resource.

13. The method of claim 11 or 12, further comprising:
indicating the time interval in the case that the transmission resource of one of the two temporary RS bursts determined based on the network side configuration conflicts with the unusable resource.

14. The method of claim 13, wherein indicating the time interval, comprises:
sending interval indication information for explicitly indicating the time interval.

15. The method of claim 14, wherein the interval indication information is carried in Downlink Control Information (DCI) or a Media Access Control (MAC) Control Element (CE).

16. The method of claim 15, wherein the DCI comprises: DCI for scheduling a Physical Downlink Shared Channel (PDSCH) of a secondary cell (SCell) activation MAC CE.

17. The method of claim 15, wherein the MAC CE carries temporary RS triggering information to implicitly indicate the time interval.

18. The method of claim 15, wherein the MAC CE carries the interval indication information.

19. The method of claim 17 or 18, wherein the temporary RS triggering information is used for a terminal to determine relevant information of a temporary RS, wherein the relevant information is information pre-configured by a Radio Resource Control (RRC) signaling and comprises the time interval information.

20. The method of any one of claims 12-19, wherein determining, based on the predefined rule, the time interval between the two temporary RS bursts transmitted adjacently, comprises:
determining, based on a minimum time interval between the adjacent two temporary RS bursts stipulated by a Random Access Network (RAN) 4 protocol and a duplex mode of the terminal, the time interval between the two temporary RS bursts transmitted adjacently.

21. The method of claim 20, wherein determining, based on the minimum time interval between the adjacent two temporary RS bursts stipulated by the RAN 4 protocol and the duplex mode of the terminal, the time interval between the two temporary RS bursts transmitted adjacently, comprises:
in response to the duplex mode of the terminal being a frequency division duplexing (FDD) mode, determining the time interval between the two temporary RS bursts transmitted adjacently as a first time interval; or
in response to the duplex mode of the terminal being a time division duplex (TDD) mode, determining, based on a TDD uplink and downlink slot structure, the time interval between the two temporary RS bursts transmitted adjacently as a maximum value of a first time interval and a second time interval;
wherein the first time interval is the minimum time interval between the adjacent temporary RS bursts stipulated by the RAN 4 protocol; and
the second time interval is a time interval between two non-consecutive downlink slots in a TDD frequency band or a time interval between two non-consecutive downlink symbols.

22. An apparatus for processing a temporary reference signal (RS) burst, comprising:
a first determining module, configured to determine a time interval between two temporary RS bursts transmitted adjacently in a case that a transmission resource of one of the two temporary RS bursts determined based on a network side configuration conflicts with an unusable resource.

23. The apparatus of claim 22, wherein the first determining module is configured to perform at least one of:
determining, based on a predefined rule, the time interval between the two temporary RS bursts transmitted adjacently in the case that the transmission resource of one of the two temporary RS bursts determined based on the network side configuration conflicts with the unusable resource; or
determining, based on an indication of a base station, the time interval between the two temporary RS bursts transmitted adjacently in the case that the transmission resource of one of the two temporary RS bursts determined based on the network side configuration conflicts with the unusable resource.

24. The apparatus of claim 23, wherein the first determining module is configured to: determine, based on a minimum time interval between the adjacent two temporary RS bursts stipulated by a Random Access Network (RAN) 4 protocol and a duplex mode of the terminal, the time interval between the two temporary RS bursts transmitted adjacently.

25. The apparatus of claim 24, wherein the first determining module is configured to: in response to the duplex mode of the terminal being a frequency division duplexing (FDD) mode, determine the time interval between the two temporary RS bursts transmitted adjacently as a first time interval; or, in response to the duplex mode of the terminal being a time division duplex (TDD) mode, determine, based on a TDD uplink and downlink slot structure, the time interval between the two temporary RS bursts transmitted adjacently as a maximum value of a first time interval and a second time interval;
wherein the first time interval is the minimum time interval between the adjacent temporary RS bursts stipulated by the RAN 4 protocol; and
the second time interval is a time interval between two non-consecutive downlink slots in a TDD frequency band or a time interval between two non-consecutive downlink symbols.

26. The apparatus of claim 23, wherein the first determining module is configured to perform at least one of:
determining, based on interval indication information included in a signaling of the base station, the time interval between the two temporary RS bursts transmitted adjacently, wherein the interval indication information indicates the time interval; or
determining the time interval between the adjacent two temporary RS bursts based on a correspondence between a signaling of the base station and a value of the time interval.

27. The apparatus of claim 26, wherein the signaling of the base station comprises at least one of:
Downlink Control Information (DCI); or
a Media Access Control (MAC) Control Element (CE).

28. The apparatus of claim 27, wherein the DCI comprises: DCI for scheduling a Physical Downlink Shared Channel (PDSCH) of a secondary cell (SCell) activation MAC CE.

29. The apparatus of claim 27, wherein the MAC CE carries the interval indication information; or
the MAC CE carries temporary RS triggering information to implicitly indicate the time interval.

30. The apparatus of claim 29, wherein the temporary RS triggering information is configured to determine relevant information of a temporary RS, wherein the relevant information is pre-configured by a RRC signaling and comprises the interval indication information for indicating the time interval.

31. The apparatus of any one of claims 27-30, wherein the DCI carries the interval indication information, and the interval indication information indicates a value of the time interval;
wherein the value of the time interval indicated by the interval indication information is a value located in a value set configured by the RRC signaling, or, a value located in a value set predefined by a protocol.

32. An apparatus for processing a temporary reference signal (RS) burst, comprising:
a second determining module, configured to determine a time interval between two temporary RS bursts transmitted adjacently in a case that a transmission resource of one of the two temporary RS bursts determined based on a network side configuration conflicts with an unusable resource.

33. The apparatus of claim 32, wherein the second determining module is configured to determine, based on a predefined rule, the time interval between the two temporary RS bursts transmitted adjacently in the case that the transmission resource of one of the two temporary RS bursts determined based on the network side configuration conflicts with the unusable resource.

34. The apparatus of claim 32 or 33, further comprising:
an indicating module, configured to indicate the time interval in the case that the transmission resource of one of the two temporary RS bursts determined based on the network side configuration conflicts with the unusable resource.

35. The apparatus of claim 34, wherein the indicating module is configured to send interval indication information for explicitly indicating the time interval.

36. The apparatus of claim 35, wherein the interval indication information is carried in Downlink Control Information (DCI) or a Media Access Control (MAC) Control Element (CE).

37. The apparatus of claim 35, wherein the DCI comprises: DCI for scheduling a Physical Downlink Shared Channel (PDSCH) of a secondary cell (SCell) activation MAC CE.

38. The apparatus of claim 35, wherein the MAC CE carries temporary RS triggering information to implicitly indicate the time interval.

39. The apparatus of claim 35, wherein the MAC CE carries the interval indication information.

40. The apparatus of claim 38 or 39, wherein the temporary RS triggering information is used for a terminal to determine relevant information of a temporary RS, wherein the relevant information is information pre-configured by a Radio Resource Control (RRC) signaling and comprises the time interval information.

41. The apparatus of any one of claims 33-40, wherein the second determining module is configured to determine, based on a minimum time interval between the adjacent two temporary RS bursts stipulated by a Random Access Network (RAN) 4 protocol and a duplex mode of the terminal, the time interval between the two temporary RS bursts transmitted adjacently.

42. The apparatus of claim 41, wherein the second determining module is configured to, in response to the duplex mode of the terminal being a frequency division duplexing (FDD) mode, determine the time interval between the two temporary RS bursts transmitted adjacently as a first time interval; or, in response to the duplex mode of the terminal being a time division duplex (TDD) mode, determine, based on a TDD uplink and downlink slot structure, the time interval between the two temporary RS bursts transmitted adjacently as a maximum value of a first time interval and a second time interval;
wherein the first time interval is the minimum time interval between the adjacent temporary RS bursts stipulated by the RAN 4 protocol; and
the second time interval is a time interval between two non-consecutive downlink slots in a TDD frequency band or a time interval between two non-consecutive downlink symbols.

43. A communication device comprising a processor, a transceiver, a memory and executable programs stored on the memory and being executable by the processor, wherein when the executable programs are executed by the processor, the method of any one of claims 1-10 or claims 11-21 is implemented.

44. A computer storage medium having executable programs stored thereon, wherein when the executable programs are executed by a processor, the method of any one of claims 1-10 or claims 11-21 is implemented.
